# EUROPEAN PATENT APPLICATION

(11) **EP 0 916 443 A1**
(43) Date of publication of application: **19.05.1999**
(21) Application number: 98121505.6
(22) Date of filing: 13.11.1998
(51) Int. Cl.: B23K 33/00, G03G 15/20, B23K 26/00

(54) **Rotating member and rotating shaft member, fixing roller, cylindrical member, and cylinder of image forming apparatus, cylindrical member welding method, rotating shaft member manufacturing method, and method of manufacturing developing sleeve of image forming apparatus**

(30) Priority: 18.11.1997 JP 317449/97; 14.07.1998 JP 198781/98
(71) Applicant: CANON KABUSHIKI KAISHA, Ohta-ku Tokyo 146 (JP)
(72) Inventor: Iwai, Koji, Ohta-ku, Tokyo (JP); Ohashi, Tsuneo, Ohta-ku, Tokyo (JP)
(74) Representative: Weser, Wolfgang

(57) **Abstract**

The object of this invention is to provide a cylindrical member welding method that can weld a cylindrical member without causing cracking. In order to achieve this object, in a cylindrical member welding method of welding, to an end portion of a cylindrical first member containing aluminum as a major component, a cylindrical or disk-like second member having substantially the same outer diameter as that of the first member and containing aluminum as a major component, a space is formed on a slightly inner side of an outer circumferential surface of a welded portion of the first and second members.

## Description

### BACKGROUND OF THE INVENTION

The present invention relates to a cylindrical member, a cylinder, a rotating member, a rotating shaft member, and the like formed by welding a closing member to the opening end portion of the cylindrical member.

The present invention also relates to a cylindrical member, a cylinder, and a rotating member used in an image forming apparatus such as a copying machine and a laser beam printer.

The present invention further relates to a welding method and manufacturing method of such a cylindrical member, rotating member, rotating shaft member, and the like.

A cylindrical member and a rotating member, e.g., a developing sleeve and a fixing roller, are used in an image forming apparatus such as a copying machine and laser beam printer.

To obtain such a cylindrical member, an aluminum material or the like is subjected to drawing to form the main body of the cylindrical portion, and a shaft member is press-fitted in the opening portion of the cylindrical member to form a cylindrical member having a shaft.

The shaft member is connected by shrink fitting through heating.

As a prior art for laser-welding an aluminum material to a to-be-welded member, one disclosed in Japanese Patent Laid-Open No. 6-15470 is available.

The technique disclosed in the above prior art has as its object to provide a laser-welding method that does not cause weld cracking in an aluminum material. As a constitution of this invention, a method of welding and edge-preparing an aluminum material to be welded and filling the welded edge portion with Si powder is disclosed.

As another method of welding an aluminum material, a prior art disclosed in Japanese Patent Laid-Open No. 9-300075 is available.

When connecting the cylindrical member of the image forming apparatus described above or cylindrical portion of the rotating member with a shaft member, if they are welded by an arc welding set or laser welding, a crack may be formed in the welded portion or the strength of the welded portion may be insufficient.

According to the studies of the present inventors, to prevent the occurrence of cracking described above, the developing sleeve of the image forming apparatus is preferably made of aluminum for easy conveyance of the developing toner or fine toner particles. An aluminum material is suitable in maintaining the working precision of the surface of the fixing roller as well. When the cylindrical member was made of aluminum and the member that closes the cylindrical member and the opening portion of the cylindrical member was also made of aluminum, if arc welding or laser welding was employed, it was confirmed that, due to the thermal conductivity of aluminum and temperature change accompanying movement of the welded portion caused by welding, the volume portion of the welded portion shrank during cooling of the welded portion, causing cracking.

The developing sleeve and fixing roller used in the image forming apparatus are axially supported by the housing of the developing or fixing unit, and accordingly require a run-out precision within a predetermined range with respect to the center of rotation of the rotating shaft. Occurrence of cracking described above includes problems such as influences to the run-out precision and strength.

An office appliance like the image forming apparatus described above has a mechanism, e.g., a rotating member, a hollow shaft member, a sleeve member, and a drum member, that is made of a large amount of aluminum material. However, it was difficult to fabricate a plurality of aluminum constituent members by welding the aluminum material.

Factors that make it difficult to weld the aluminum material are a large affinity with oxygen and the high melting point of its oxide film that interferes with fusion of the base material and filler metal.

The aluminum material also has a large thermal conductivity and it is accordingly difficult to locally heat it.

Since the aluminum material has a large coefficient of expansion, distortion tends to occur to easily cause cracking during solidification.

Since the aluminum material tends to absorb a gas easily, it absorbs hydrogen by dissolution from the moist in the atmosphere and the like to suffer problems such as formation of a blow hole.

### SUMMARY OF THE INVENTION

The present invention has been made in view of the above problems, and has as its object to provide a cylindrical member, a cylinder, a rotating member, and a rotating shaft member that can be welded without cracking, and a welding method and manufacturing method of the same.

In order to solve the above problems and to achieve the above object, a rotating member according to the present invention is characterized by the following structure.

That is, there is provided a rotating member formed by closing an opening portion of a cylindrical member, which has at least one open end, with a closing member, wherein a space portion is formed in abutment surfaces of the cylindrical member and the closing member, and outer circumferences of the abutment surfaces are welded.

A rotating shaft member according to the present invention is characterized by the following structure.

That is, there is provided a rotating shaft member formed by closing an opening portion on one end side of a cylindrical member with a shaft member, wherein a space portion is formed in abutment surfaces of the cylindrical member and the rotating shaft member, and outer circumferences of the abutment surfaces are welded.

A fixing roller of an image forming apparatus according to the present invention is characterized by the following structure.

That is, there is provided a fixing roller of an image forming apparatus, wherein a space portion is formed in abutment surfaces of a cylindrical member and a shaft member, and outer circumferential surfaces of the abutment surfaces are welded.

A cylindrical member according to the present invention is characterized by the following structure.

That is, there is provided a cylindrical member formed by fitting a closing member in an inner-diameter portion of an opening portion of a cylindrical member having one open end, forming a recess near an inner-diameter fitting portion which is fitted, and welding the fitting portion.

A rotating shaft member manufacturing method of the present invention according to the first aspect is characterized by the following steps.

That is, there is provided a rotating shaft member manufacturing method comprising the steps of: preparing an aluminum cylinder and an aluminum shaft member for closing an opening surface of the cylinder; forming a space portion in abutment surfaces of the cylindrical member and the shaft member; and abutting the cylindrical member and the shaft member against each other and welding the cylindrical member and the shaft member by irradiating outer circumferential surfaces of the abutment surfaces with a YAG laser.

A rotating shaft member manufacturing method of the present invention according to the second aspect is characterized by the following steps.

That is, there is provided a rotating shaft member manufacturing method comprising the steps of: preparing an aluminum cylindrical member and a shaft member having a flange portion to be fitted in an inner-diameter portion of the cylindrical member; forming a recess in the flange portion of the shaft member near a position where the flange portion is to be fitted; and fitting the flange portion of the shaft member in an inner-diameter portion of an opening portion of the cylindrical member and welding a fitting portion by irradiation of a YAG laser.

A fixing roller manufacturing method according to the present invention is characterized by the following steps.

That is, there is provided a fixing roller manufacturing method comprising the steps of: preparing an aluminum cylindrical member and an aluminum shaft member that closes an open surface of the cylinder; forming a space portion in abutment surfaces of the cylindrical member and the shaft member; abutting the cylindrical member and the shaft member against each other and welding the cylindrical member and the shaft member by irradiating outer circumferential surfaces of the abutment surfaces with a YAG laser; and covering the outer circumferential surface of the cylindrical member with rubber.

A developing sleeve manufacturing method according to the present invention is characterized by the following steps.

That is, there is provided a developing sleeve manufacturing method comprising the steps of: preparing an aluminum cylindrical member and a shaft member having a flange portion to be fitted in an inner-diameter portion of the cylindrical member; forming a recess in the flange portion of the shaft member near a position where the flange portion is to be fitted; and fitting the flange portion of the shaft member in an inner-diameter portion of an opening portion of the cylindrical member and welding a fitting portion by irradiation of a YAG laser.

An aluminum cylindrical member welding method according to the present invention is characterized by the following steps.

That is, there is provided a method of welding an opening portion of an aluminum cylindrical member with a closing member, comprising the step of, in performing welding while moving a weld portion of the cylindrical member, welding the weld portion by suppressing a rapid increase in cooling rate of a welded portion.

A cylindrical member welding method of the present invention according to the first aspect is characterized by the following steps.

That is, there is provided a cylindrical member welding method of welding, to an end portion of a cylindrical first member containing aluminum as a major component, a cylindrical or disk-like second member having substantially the same outer diameter as that of the first member and containing aluminum as a major component, comprising the step of forming a space on a slightly inner peripheral side of an outer circumferential surface of a welded portion of the first and second members.

A cylindrical member welding method of the present invention according to the second aspect is characterized by the following steps.

That is, there is provided a cylindrical member welding method of welding, to an end portion of a cylindrical first member containing aluminum as a major component, a cylindrical or disk-like second member having substantially the same outer diameter as that of the first member and containing aluminum as a major component, comprising the step of forming a hole at welding start and end points of the first and second cylindrical members.

A cylindrical member welding method of the present invention according to the third aspect is characterized by the following steps.

That is, there is provided a cylindrical member welding method of welding, to an end portion of a cylindrical first member containing aluminum as a major component, a cylindrical or disk-like second member having substantially the same outer diameter as that of the first member and containing aluminum as a major component, comprising the step of forming a groove in an outer circumferential surface of a joined portion of the first and second cylindrical members to guide a wire made of a weld material.

A cylinder of the present invention according to the first aspect is characterized by the following structure.

That is, there is provided a cylinder formed by welding, to an end portion of a cylindrical first member containing aluminum as a major component, a cylindrical or disk-like second member having substantially the same outer diameter as that of the first member and containing aluminum as a major component, wherein a space is formed on a slightly inner peripheral side of an outer circumferential surface of a welded portion of the first and second members.

A cylinder of the present invention according to the second aspect is characterized by the following structure.

That is, there is provided a cylinder formed by welding, to an end portion of a cylindrical first member containing aluminum as a major component, a cylindrical or disk-like second member having substantially the same outer diameter as that of the first member and containing aluminum as a major component, wherein a hole is formed at welding start and end points of the first and second cylindrical members.

A cylinder of the present invention according to the third aspect is characterized by the following structure.

That is, there is provided a cylinder formed by welding, to an end portion of a cylindrical first member containing aluminum as a major component, a cylindrical or disk-like second member having substantially the same outer diameter as that of the first member and containing aluminum as a major component, wherein a groove for guiding a wire made of a weld material is formed in an outer circumferential surface of a joined portion of the first and second cylindrical members.

Other objects and advantages besides those discussed above shall be apparent to those skilled in the art from the description of a preferred embodiment of the invention which follows. In the description, reference is made to accompanying drawings, which form a part hereof, and which illustrate an example of the invention. Such example, however, is not exhaustive of the various embodiments of the invention, and therefore reference is made to the claims which follow the description for determining the scope of the invention.

### BRIEF DESCRIPTION OF THE DRAWINGS

Fig. 1 is a view showing the arrangement of a welding set for a cylindrical member according to the first embodiment of the present invention;
Fig. 2 is a perspective view showing a state wherein cracking occurs at the welded portion during laser welding;
Fig. 3 is a view showing the first embodiment for preventing cracking of the welded portion;
Fig. 4 is a table showing the results obtained by performing welding while changing the welding conditions variously;
Fig. 5 is a view showing the second embodiment for preventing cracking of the welded portion;
Fig. 6 is a view showing the third embodiment for preventing cracking of the welded portion;
Fig. 7 is a perspective view showing a welding method using a weld material;
Fig. 8 is a view for explaining the structure of a cylindrical member of cylindrical shaft member;
Fig. 9 is a sectional view of the welded portion of the cylindrical member;
Fig. 10 is a sectional view of the main part of the cylindrical member;
Fig. 11 is a sectional view of the main part of a shaft member;
Fig. 12 is a view showing the arrangement of an image forming apparatus to which the present invention is applied;
Fig. 13 is a view for explaining a modification;
Fig. 14 is a view for explaining a modification;
Fig. 15 is a view for explaining the fifth embodiment; and
Fig. 16 is a view for explaining the arrangement of the main part.

### DETAILED DESCRIPTION OF THE PREFERRED EMBODIMENTS

The preferred embodiments of the present invention will be described in detail with reference to the accompanying drawings.

### (First Embodiment)

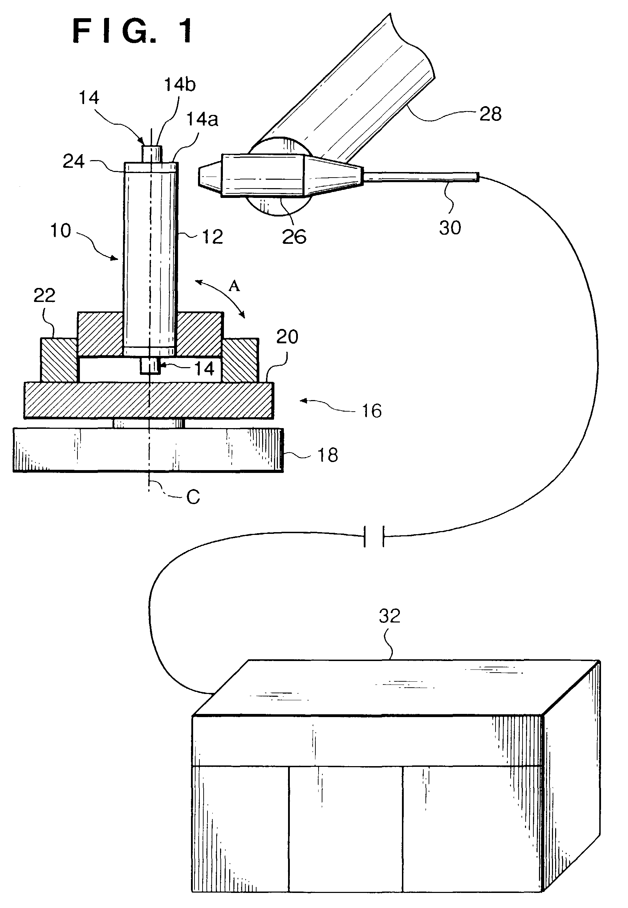

Fig. 1 is a view showing the arrangement of a welding set for a cylindrical member according to the first embodiment. Referring to Fig. 1, a work 10 as a cylinder is constituted by a cylindrical member 12 containing aluminum as a major component, and a flange member 14 having a flange portion 14a to be welded to the cylindrical member 12 and a shaft portion 14b provided to extend vertically from the flange portion 14a. The flange member 14 is also made of a material containing aluminum as the major component. The work 10 is chucked by a work rotating unit 16 and is supported to be rotatable about a rotation axis C. The work rotating unit 16 has a base 18 and a rotating table 20 rotatably driven by a motor arranged in the base 18. The work 10 is chucked by a chucking unit 22 arranged on the rotating table 20, and is rotatably driven, together with the rotating table 20, about the rotation axis C. The base 18 is supported by a pivoting unit (not shown) to be rotatable through 90° in the direction of an arrow A. The posture of the work 10 can be changed by this pivoting unit to a vertical state and a horizontal state.

A condenser lens 26 for irradiating a weld portion 24 of the work 10 with a YAG laser beam is arranged near the weld portion 24. When the YAG laser beam from the condenser lens 26 irradiates the weld portion 24, it fuses a portion near the weld portion 24 of the cylindrical member 12 and flange member 14 by heating. Thereafter, this fused portion is cooled and solidified. Welding is performed in this manner. In this embodiment, welding is performed by fusing the work to be connected by heating, and any weld material other than the work is not used.

The condenser lens 26 is supported by a multi-articulated robot 28 to be movable three-dimensionally. Therefore, the cylindrical member 12 and flange member 14 can be welded to each other also by stopping rotation of the work 10 and moving the condenser lens 26 about the work 10. The YAG laser beam oscillated by an laser oscillator 32 is guided to the work 10 through an optical fiber 30. In this embodiment, the optical fiber 30 has a diameter of 0.6 mm, and the laser oscillator 32 has a wavelength of 1.06 µm and an output of 2.0 kW.

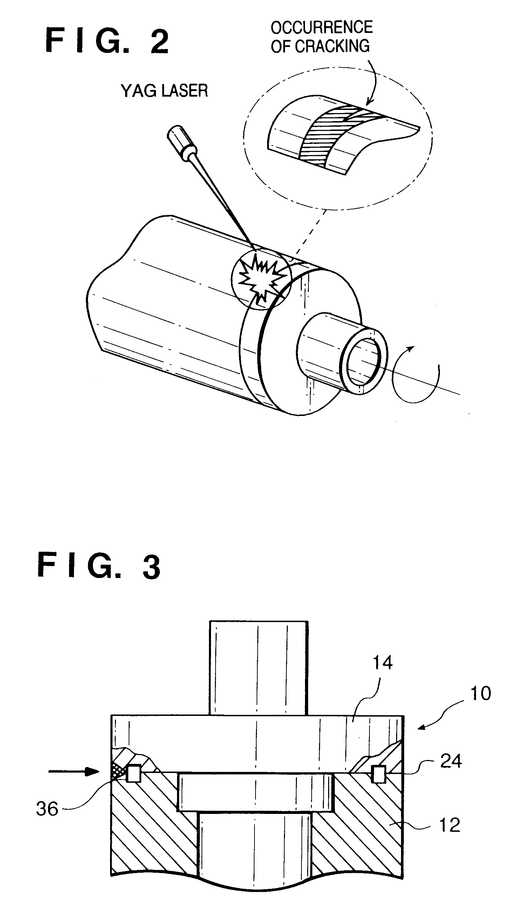

Fig. 2 is a perspective view showing a state wherein cracking occurs in the welded portion during laser welding. According to the studies of the present inventors, cracking has occurred because the welded portion shrinks quickly due to the high cooling rate of the welded portion, causing an excessive stress.

Fig. 3 is a view showing the first embodiment for preventing cracking of the welded portion caused by rapid cooling.

In this embodiment, as shown in Fig. 3, a space 36 is formed on the slightly inner peripheral side of the outer surface of the weld portion 24 between the flange member 14 and cylindrical member 12. Since air has comparatively large heat-insulating properties, air in the space 36 prevents heat of the weld portion 24 from escaping to the central portion of the work 10, thereby decreasing the cooling rate of the weld portion 24. Accordingly, when the space 36 as shown in Fig. 3 is formed, the cooling rate of the weld portion 24 is decreased, and an excessive stress does not act, preventing occurrence of cracking.

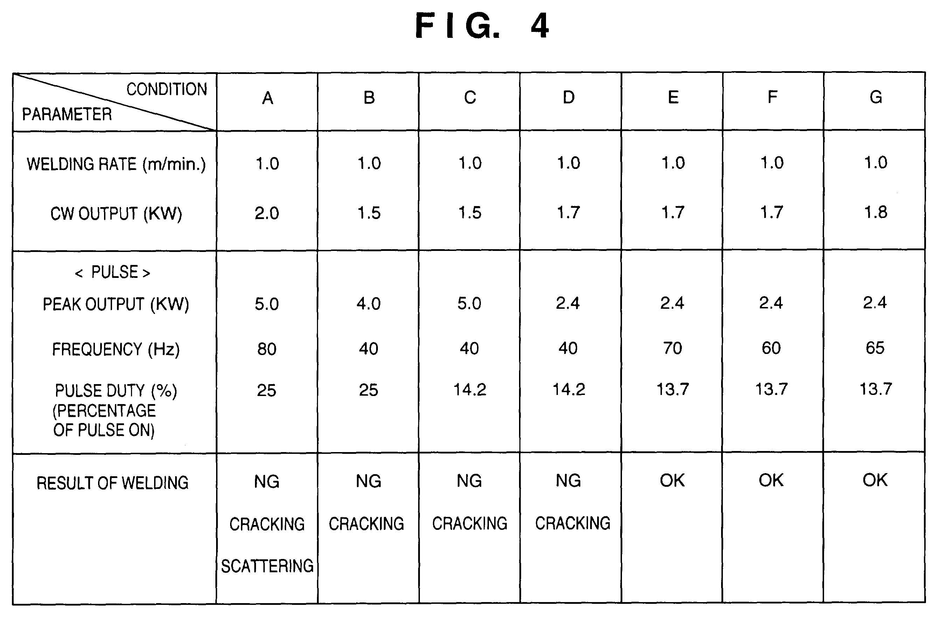

Fig. 4 is a table showing the results obtained by forming the space 36 as shown in Fig. 3 and performing welding while changing the welding conditions variously.

According to Fig. 4, when the space 36 is formed in the work 10 and appropriate welding conditions are set, as in this embodiment, aluminum welding free from cracking can be performed.

### (Second Embodiment)

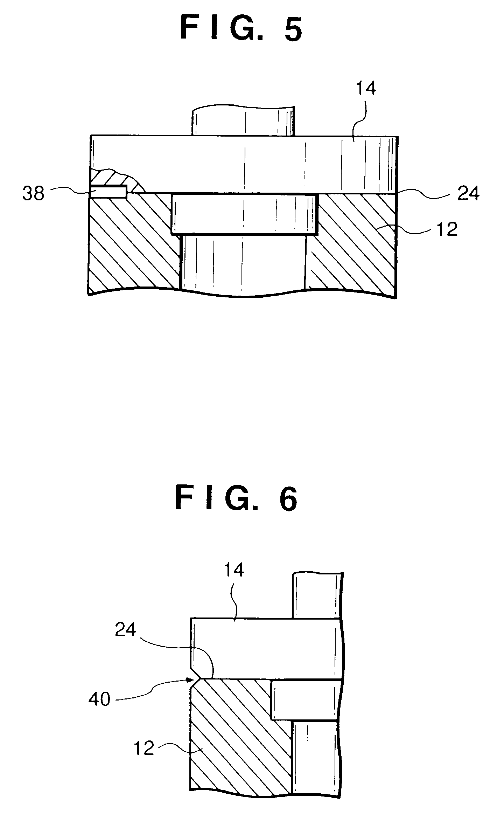

Fig. 5 is a view showing the second embodiment for preventing cracking in the welded portion.

In the second embodiment, a hole 38 as shown in Fig. 5 is formed at the welding start and end points of a work 10. At the welding start and end points, a weld portion 24 is heated twice, i.e., at the welding start time and the welding end time, in an overlapping manner, and accordingly the start and end points experience the heat history from heating to rapid cooling twice. For this reason, conventionally, cracking often occurs at the welding start and end points.

In this embodiment, since the hole 38 is formed at the welding start and end points, the welded portion is disconnected before and after the hole 38, and the heated portions to not overlap. Since air in the hole 38 interferes with heat transfer from the welding end point to the welding start point, one point in the weld portion 24 does not experience the heat history from heating to rapid cooling twice. For this reason, when a hole is formed at the welding start and end points, as in this embodiment, occurrence of cracking can be prevented.

### (Third Embodiment)

Fig. 6 is a view showing the third embodiment of the present invention for preventing cracking in the welded portion.

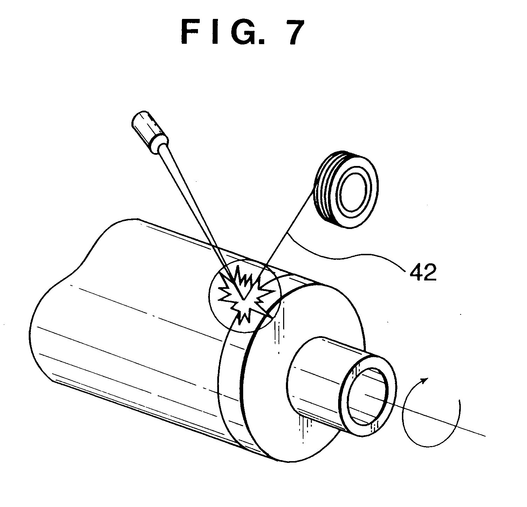

In the third embodiment, a cylindrical member 12 and a flange member 14 are not fused by direct heating, but are welded by using a wire 42 made of a weld material, as shown in Fig. 7.

It is conventionally known that, when a weld material is used, welding almost free from cracking can be performed by adjusting the composition of the weld material. When, however, the weld material is used, it is conventionally difficult to accurately weld the weld material along the weld portion, and the weld material is accordingly difficult to use.

In this embodiment, as shown in Fig. 6, a V-shaped groove 40 is formed at a weld portion 24, and the weld material 42 is guided along the groove 40. This allows the weld material 42 to be accurately welded along the weld portion 24. Welding almost free from cracking can be performed by adjusting the composition of the weld material 42.

### (Fourth Embodiment)

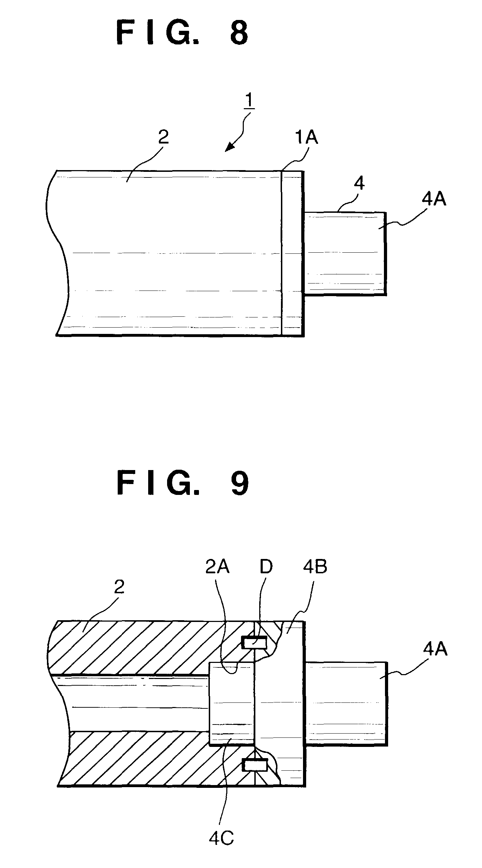

Fig. 8 is a view showing the main part of one portion (on one side) of the outer appearance of a cylindrical shaft member 1 according to the fourth embodiment of the present invention.

Referring to Fig. 8, reference numeral 2 denotes a cylindrical member; 4, a closing member; and 1A, a weld portion. The closing member 4 has a shaft portion 4A for closing the opening of the cylindrical member 2. The cylindrical member 2 and the shaft member 4 are abutted against each other at the weld portion 1A.

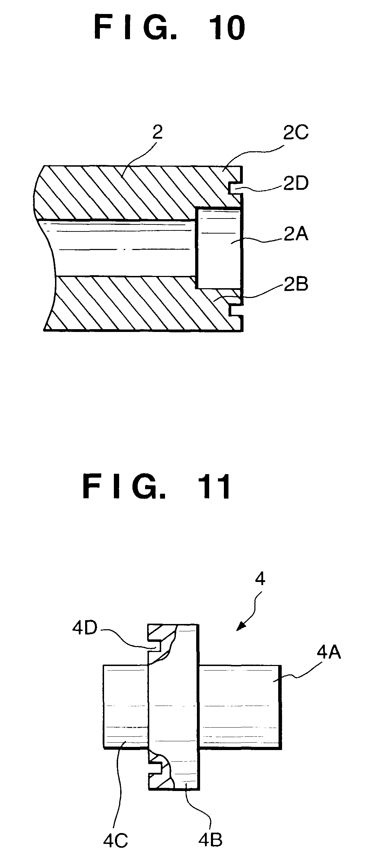

Fig. 9 is a sectional view of the main part of the cylindrical shaft member 1 shown in Fig. 8.

The shaft member 4 is constituted by a flange surface 4B, a fitting portion 4C, and the shaft portion 4A described above. The flange surface 4B is abutted against the end face on the opening side of the cylindrical member 2. The fitting portion 4C is fitted in an inner-diameter fitting portion 2A formed in the inner-diameter surface of the cylindrical member 2.

The cylindrical member 2 has a hollow cylindrical shape and is made of an aluminum alloy.

The procedure with which the cylindrical member 2 and shaft member 4 are welded to each other will be described.

First, as shown in Fig. 10, the aluminum cylindrical member 2 obtained by drawing is prepared, and the inner-diameter surface of its opening portion 2A is cut to have such an inner diameter that the fitting portion 4C of the shaft member can be fitted in it, thereby forming an inner-diameter cut portion 2B.

Subsequently, an annular recess 2D is formed in an abutment surface 2C on the opening side of the cylindrical member 2.

As shown in Fig. 11, an annular recess 4D is formed, in the abutment surface of the flange portion 4B of the aluminum shaft member 4 with respect to the cylindrical member 2, at a position facing the recess 2D of the cylindrical member 2.

The recesses 2D and 4D of the cylindrical member 2 and shaft member 4, respectively, form an annular space portion D shown in Fig. 9 when the cylindrical member 2 and shaft member 4 are abutted against each other.

The welding set used in this embodiment is identical to that of the first embodiment shown in Fig. 1.

The welding operation will be described.

The inner-diameter fitting portion 4C of the shaft member 4 is fitted in the inner-diameter portion 2B of the opening portion 2A of the cylindrical member 2, and the cylindrical member 2 is fixed by a chucking unit 22 arranged on a rotating table 20.

The cylindrical member 2 and shaft member 4 fixed by the chucking unit 22 are rotated by the rotating operation of the rotating table 20, and a YAG laser beam from a condenser lens 26 irradiates the weld portion 1A shown in Fig. 8. The laser beam irradiating the bonding portion 1A irradiates mainly the joined portion of the cylindrical member 2 and shaft member 4.

An example wherein the present invention is practiced in the fixing roller of an image forming apparatus will be described.

To form the cylindrical member 2, a material A5056 of the Japanese Industrial Standards (JIS) was used.

The cylinder had a diameter of 59 mm, a length of 330 mm, and a thickness of 12.5 mm, and its opening portion had an inner diameter of 42.0 mm.

The cylindrical member 2 was constituted by a drawing material, and its run-out precision criterion at the center of shaft was within 10 µm.

The outer circumferential surface of the above cylindrical member was blasted.

To form the shaft member 4, a material A5056 of the JIS standards was used. The shaft member 4 having a flange portion with a diameter of 59 mm, the shaft portion 4A with a diameter of 38 mm, and the inner-diameter fitting portion 4C with a diameter of 42 mm was used.

The recesses 2D and 4D were grooved in the joined surface of the cylindrical member 2 and shaft member 4 to form the space portion D described above.

The recess in each member 2 or 4 had a depth of 2.0 mm and a width of 2.0 mm. The rotation speed of the rotating table 20 was set to 1.0 m/min.

As a YAG laser, one using Nd and having a wavelength of 1.064 µm and the maximum output of 2.4 kW was used. The condenser lens had a focal length f of 120 mm.

The welding operation was performed with the apparatus arrangement shown in Fig. 1 and under the parameter conditions described above. The laser beam emerging from the condenser lens 26 irradiated the weld portion 1A shown in Fig. 8 to heat portions of the cylindrical member 2 and shaft member 4 near the irradiation portion, thereby welding the cylindrical member 2 and shaft member 4 to each other. At the same time, the cylindrical member 2 and shaft member 4 were rotated so that the weld portion 1A was sequentially welded along the outer circumferential direction. Although heat of the laser beam irradiating the weld portion spreaded to near the irradiated portion of the cylindrical member 2 and shaft member 4, due to the presence of the space portion D, the heat conduction was subjected to the heat-insulating properties of air in the space portion D.

Air in the space portion D was also heated, and its temperature was increased.

Due to the rotation of the cylindrical member 2 and shaft member 4 by the rotating table 20, the welded portion moved to separate from the laser beam and was rapidly cooled by the surrounding air.

If the space portion D is not present, this rapid cooling causes cracking due to the expansion and shrinkage in volume of the weld portion. Since the space portion D is provided, rapid volume shrinkage of the weld portion can be moderated by the heated air in the space portion D, so that occurrence of cracking can be suppressed.

The weld portion of the cylindrical member 2 welded by the above method was visually observed with a 50x optical microscope. No cracking was observed in the weld portion and its vicinity.

The welded cylindrical member 2 was subjected to torque inspection with a torque tester. A torque preset by the present inventors was satisfied.

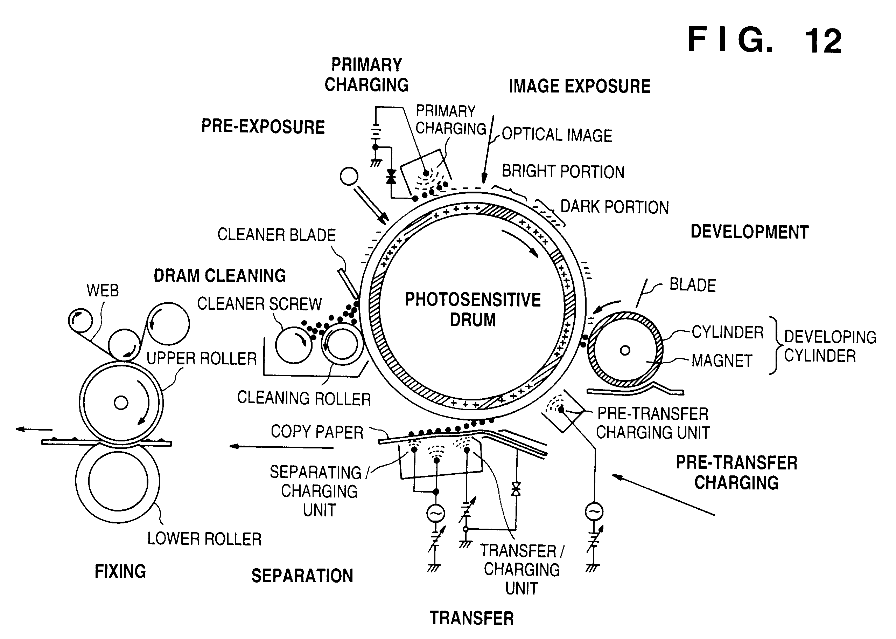

Fig. 12 is a view showing the arrangement of the main part of an image forming apparatus in which a fixing roller according to the present invention is incorporated. The rotating shaft member of the present invention is used as the roller of the fixing unit shown in Fig. 12.

### (Description of Modifications)

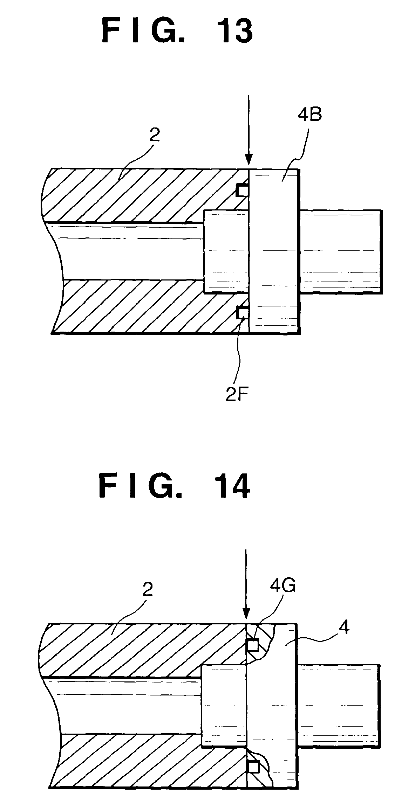

Figs. 13 and 14 show modifications of the welding method shown in Fig. 9.

Fig. 13 shows a case wherein a recess 2F is formed only in an opening end portion 2C of a cylindrical member 2 identical to that shown in Fig. 9, whereas a closing surface 4B of a shaft member 4 is flattened.

In this modification, the recess 2F serves as a space portion. When the abutment surfaces of the cylindrical member 2 and shaft member 4 are welded to each other, air in the space portion 2F suppresses rapid cooling, so that occurrence of cracking in the welded portion is prevented.

Fig. 14 shows a modification wherein a recess 4G serving as a space portion is formed in the abutment surface of a shaft member 4.

### (Fifth Embodiment)

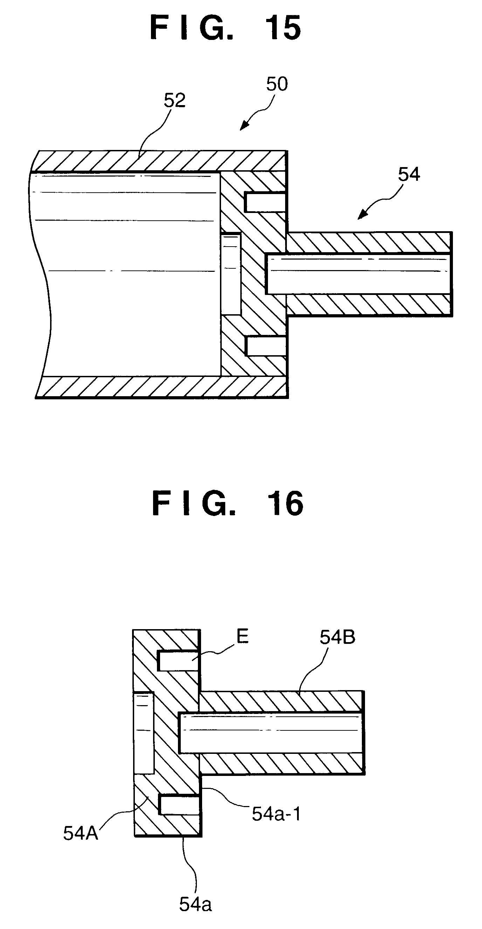

Fig. 15 is a sectional view of the main part of a cylindrical member 50 according to the fifth embodiment of the present invention.

Referring to Fig. 15, reference numeral 52 denotes a hollow cylindrical member (sleeve member); and 54, a flange member. The flange member 54 is fixed and welded in the inner-diameter portion of the opening portion of the sleeve member 52.

Fig. 16 is a sectional view of the main part of the flange member 54.

The flange member 54 is mainly constituted by a flange portion 54A and a shaft portion 54B. An outer circumferential surface 54a of the flange portion 54A is fitted in the inner-diameter portion of the opening end portion of the sleeve member 52.

A recess E is formed in an outer side surface 54a-1 of the flange portion 54A near the fitting portion with respect to the sleeve member 52.

The recess E is formed annularly in the flange surface.

To form the sleeve member 52, a material A6063 of the JIS standards was used. To form the flange member 54, a material A2011 of the JIS standards was used.

The sleeve member had a diameter of 20 mm and a length of 340 mm.

The flange member had a flange portion with a thickness of 0.7 mm. The recess E in the flange surface had a depth of 2.0 mm and a width of 2.0 mm. The recess E was set at a position 2.0 mm from the outer circumference of the flange surface 54a.

As the welding set, one having the same arrangement as that of the set shown in Fig. 1 was employed.

Regarding the welding conditions, the welding rate was 2.0 to 3.0 m/min, the output was 1.1 kW, and the focal length f of the condenser lens was 60 mm.

The flange surface of the flange member 54 was fitted in the opening end portion of the sleeve member 52, and the sleeve member 52 was fixed on a chucking unit 22 of a rotating table 20. A welding operation under the above welding conditions was performed.

The sleeve member 52 and flange member 54 were rotated while irradiating their fitting portion shown in Fig. 15 with a laser beam.

The sleeve member and flange member near the weld portion irradiated with the laser beam are increased in temperature so that they are welded to each other. The ambient temperature also increases quickly.

At the same time, the welded portion is rotated so that it is moved sequentially.

A portion of the welded portion separated from the laser beam by rotation is rapidly cooled, and thermal stress acts on the welded portion due to this temperature change. Since heat transferred by irradiation of the laser beam to the space portion E formed near the welded portion heats air in the space portion, occurrence of cracking caused by rapid cooling of the heated air is suppressed.

The sleeve manufactured in accordance with this embodiment can be used as the developing sleeve (cylinder) of the image forming apparatus shown in Fig. 12.

The present invention can be applied to changes and modifications of the above embodiments without departing from the spirit and scope of the invention.

For example, in the above embodiments, a cylindrical member and a flange member were joined. However, the present invention is not limited to this, but can be applied to welding of a cylindrical member and a cylindrical member, welding of a cylindrical member and a circular columnar member, welding of a cylindrical member and a disk-like member, and the like.

In the above embodiments, a V-shaped groove was formed in the weld portion. However, the groove is not limited to a V-shaped groove, but can be a semicircular or square groove.

As has been described above, according to the present invention, welding almost free form cracking can be performed.

Difficulties in the welding operation of a conventional cylindrical portion made of an aluminum material were eliminated.

A fixing unit having good fixing performance was obtained.

A manufacturing method excellent in productivity was obtained.

A developing sleeve having good performance was obtained.

The present invention is not limited to the above embodiments and various changes and modifications can be made within the spirit and scope of the present invention. Therefore, to apprise the public of the scope of the present invention the following claim are made.

## Claims

1. A rotating member formed by closing an opening portion of a cylindrical member, which has at least one open end, with a closing member, characterized in that a space portion is formed in abutment surfaces of said cylindrical member and said closing member, and outer circumferences of said abutment surfaces are welded.

2. The rotating member according to claim 1, characterized in that said space portion is formed in said cylindrical member.

3. The rotating member according to claim 1, characterized in that said space portion is formed in said closing member.

4. The rotating member according to claim 1, characterized in that said cylindrical member and said closing member are made of an aluminum alloy material, and welding is performed by using a YAG laser.

5. A rotating shaft member formed by closing an opening portion on one end side of a cylindrical member with a shaft member, characterized in that a space portion is formed in abutment surfaces of said cylindrical member and said rotating shaft member, and outer circumferences of said abutment surfaces are welded.

6. The rotating shaft member according to claim 5, characterized in that said space portion is formed in one of said abutment surfaces of said cylindrical member and said shaft member.

7. The rotating shaft member according to claim 5, characterized in that said cylindrical member and said shaft member are made of an aluminum alloy material and are welded to each other by a YAG laser.

8. A fixing roller of an image forming apparatus, characterized in that a space portion is formed in abutment surfaces of a cylindrical member and a shaft member, and outer circumferential surfaces of said abutment surfaces are welded.

9. The fixing roller according to claim 8, characterized in that said space portion is formed in one of said cylindrical member and said shaft member.

10. A cylindrical member characterized in that said cylindrical member is formed by fitting a closing member in an inner-diameter portion of an opening portion of a cylindrical member having one open end, forming a recess near an inner-diameter fitting portion which is fitted, and welding said fitting portion.

11. The cylindrical member according to claim 10, characterized in that said cylindrical member is a developing sleeve of an image forming apparatus.

12. The cylindrical member according to claim 10, characterized in that said cylindrical member is a fixing roller of an image forming apparatus.

13. A rotating shaft member manufacturing method characterized by comprising the steps of:
preparing an aluminum cylinder and an aluminum shaft member for closing an opening surface of said cylinder;
forming a space portion in abutment surfaces of said cylindrical member and said shaft member; and
abutting said cylindrical member and said shaft member against each other and welding said cylindrical member and said shaft member by irradiating outer circumferential surfaces of said abutment surfaces with a YAG laser.

14. A rotating shaft member manufacturing method characterized by comprising the steps of:
preparing an aluminum cylindrical member and a shaft member having a flange portion to be fitted in an inner-diameter portion of said cylindrical member;
forming a recess in said flange portion of said shaft member near a position where said flange portion is to be fitted; and
fitting said flange portion of said shaft member in an inner-diameter portion of an opening portion of said cylindrical member and welding a fitting portion by irradiation a YAG laser.

15. The method according to claim 13, characterized in that said YAG laser performs irradiation of pulses obtained by adding a continuously oscillated laser and pulse oscillation.

16. A method of manufacturing a fixing roller of an image forming apparatus, characterized by comprising the steps of:
preparing an aluminum cylindrical member and an aluminum shaft member that closes an open surface of said cylinder;
forming a space portion in abutment surfaces of said cylindrical member and said shaft member;
abutting said cylindrical member and said shaft member against each other and welding said cylindrical member and said shaft member by irradiating outer circumferential surfaces of said abutment surfaces with a YAG laser; and
covering said outer circumferential surface of said cylindrical member with rubber.

17. A method of manufacturing a developing sleeve of an image forming apparatus, characterized by comprising the steps of:
preparing an aluminum cylindrical member and a shaft member having a flange portion to be fitted in an inner-diameter portion of said cylindrical member;
forming a recess in said flange portion of said shaft member near a position where said flange portion is to be fitted; and
fitting said flange portion of said shaft member in an inner-diameter portion of an opening portion of said cylindrical member and welding a fitting portion by irradiation of a YAG laser.

18. A method of welding an opening portion of an aluminum cylindrical member with a closing member, characterized by comprising the step of, in performing welding while moving a weld portion of said cylindrical member, welding said weld portion by suppressing a rapid increase in cooling rate of a welded portion.

19. A cylindrical member welding method of welding, to an end portion of a cylindrical first member containing aluminum as a major component, a cylindrical or disk-like second member having substantially the same outer diameter as that of said first member and containing aluminum as a major component, characterized by comprising the step of
forming a space on a slightly inner peripheral side of an outer circumferential surface of a welded portion of said first and second members.

20. A cylindrical member welding method of welding, to an end portion of a cylindrical first member containing aluminum as a major component, a cylindrical or disk-like second member having substantially the same outer diameter as that of said first member and containing aluminum as a major component, characterized by comprising the step of
forming a hole at welding start and end points of said first and second cylindrical members.

21. A cylindrical member welding method of welding, to an end portion of a cylindrical first member containing aluminum as a major component, a cylindrical or disk-like second member having substantially the same outer diameter as that of said first member and containing aluminum as a major component, characterized by comprising the step of
forming a groove in an outer circumferential surface of a joined portion of said first and second cylindrical members to guide a wire made of a weld material.

22. The method according to claim 21, characterized in that said groove has a V-shaped section.

23. The method according to claim 21, characterized in that said weld material is made of a material containing aluminum as a major component.

24. A cylindrical member formed by for welding, to an end portion of a cylindrical first member containing aluminum as a major component, a cylindrical or disk-like second member having substantially the same outer diameter as that of said first member and containing aluminum as a major component,
characterized in that a space is formed on a slightly inner peripheral side of an outer circumferential surface of a welded portion of said first and second members.

25. A cylinder formed by welding, to an end portion of a cylindrical first member containing aluminum as a major component, a cylindrical or disk-like second member having substantially the same outer diameter as that of said first member and containing aluminum as a major component,
characterized in that a hole is formed at welding start and end points of said first and second cylindrical members.

26. A cylinder formed by welding, to an end portion of a cylindrical first member containing aluminum as a major component, a cylindrical or disk-like second member having substantially the same outer diameter as that of said first member and containing aluminum as a major component,
characterized in that a groove for guiding a wire made of a joined material is formed in an outer circumferential surface of a welded portion of said first and second cylindrical members.

27. The cylinder according to claim 26, characterized in that said groove has a V-shaped section.

28. The cylinder according to claim 26, characterized in that said weld material is made of a material containing aluminum as a major component.
